# EUROPEAN PATENT APPLICATION

(11) **EP 4 106 359 A1**
(43) Date of publication of application: **21.12.2022**
(21) Application number: 22179599.0
(22) Date of filing: 17.06.2022
(51) Int. Cl.: H04W 4/40, H04W 12/08, H04W 12/041, G06F 7/58

(54) **A METHOD AND SYSTEM FOR SEED GENERATION**

(30) Priority: 17.06.2021 GB 202108689
(71) Applicant: Haldex Brake Products AB, 26124 Landskrona (SE)
(72) Inventor: BOWLAS, Craig, Lindley, CV13 6DE (GB)
(74) Representative: Forresters IP LLP

(57) **Abstract**

A system and method of generating a seed in a vehicle security protocol with a vehicle system including an electronic control unit, a sensor and a digital converter, the method including:

measuring, using the sensor, a parameter indicative of a characteristic of a vehicle, outputting from the sensor a signal relating to the measurement, converting, using the digital converter, the signal to a digital output, receiving the digital output at the electronic control unit and processing to extract one or more bits from the digital output for use in seed generation, and using the extracted bit(s) as at least part of a seed.

## Description

### Introduction

Embodiments of the present invention relate to a system and method of seed generation. Embodiments particularly relate to a system of seed generation in a heavy goods vehicle.

Modern heavy good vehicles typically possess one or more electronic control units (ECUs), which are connected via an electronic link (e.g. a CAN bus). The ECUs communicate between the individual ECUs and control brake application and other vehicle parameters. Typically, multiple sensors that record different aspects of the vehicle infrastructure are present and the information recorded is sent to an ECU - for example, a wheel speed sensor records information about wheel rotation and a pressure sensor may record the pressure present in an air supply that feeds the brake system.

In addition to internal vehicle communication, one or more ECU may also be adapted to allow external communication. Such external communication may be used for vehicle diagnostics and, as such, involve critical vehicle and/or safety information. Thus, it is important that appropriate security processes are implemented to ensure that unauthorised access does not occur.

A common diagnostic protocol is the Unified Diagnostic Services (UDS) (specified in ISO 14229), which is used in an ECU to ensure external communication follows a set "challenge-response" format. Typically, the external communicator (the "tester") connects and asks for access / a "seed". The ECU responds with the seed, which is processed by the tester with a secret algorithm / manipulation to generate a "key". The tester responds with the key and the ECU assesses whether the key is an expected response or not. If the key is acceptable, the requested security clearance is granted to the tester.

Embodiments of the present invention seek to overcome or alleviate one or more problems associated with the prior art.

According to a first aspect of the invention we provide a method of generating a seed in a vehicle security protocol with a vehicle system including an electronic control unit, a sensor and a digital converter, the method including:
measuring, using the sensor, a parameter indicative of a characteristic of a vehicle,
outputting from the sensor a signal relating to the measurement,
converting, using the digital converter, the signal to a digital output,
receiving the digital output at the electronic control unit and processing to extract one or more bits from the digital output for use in seed generation, and
using the extracted bit(s) as at least part of a seed.

The method may include using at least two sensors. Each sensor measuring a parameter being indicative of a characteristic of the vehicle and outputting a signal from each sensor. The method may include using at least 8 or at least 16 sensors (which may depend on the number of bits required for the seed). Each sensor may measure a different parameter indicative of a characteristic of the vehicle, and outputting a signal.

The method may include converting each signal to a digital output. Further, it may include receiving each digital output at the electronic control unit and processing to extract one or more bits from each digital output.

The method may include extracting two bits from the digital output which are subsequently used in seed generation. The method may include using the extracted bit(s) to form the entire seed. The method may include extracting the one or more bits from an end of the or each digital output. The method may include forming a 16 or 32 bit string seed.

The method may include using the electronic control unit to randomise the extracted bits when forming the seed. The method may include a step of storing one or more digital outputs in memory prior to forming the seed.

The method may include storing the digital output at a predetermined time after one or more events occur. The event may be at least one of as vehicle ignition, a braking action, and a suspension adjustment.

The method may include sending the seed to an external device following a request by the external device to access protected information.

According to a second aspect of the invention we provide a system for generating a seed in a vehicle security protocol including:
an electronic control unit,
a digital converter, and
a sensor operable to measure a parameter indicative of a characteristic of a vehicle and output a signal relating to the measurement, the digital converter operable to receive and convert the signal to a digital output, and
wherein the electronic control unit is operable to process the digital output to extract one or more bits from the digital output, and to generate a seed at least partially from the extracted bit(s).

The electronic control unit may form part of a braking system of the vehicle or part of the vehicle (such as the tractor or trailer). The system may include two or more sensors, each being operable to measure a parameter indicative of a characteristic of the vehicle. The system may include at least 8 or at least 16 sensors, each being operable to measure a parameter indicative of a characteristic of the vehicle.

The or each sensor may be a sensor used within a braking system and / or suspension system of the vehicle. Optionally, the or each sensor may be one of a pressure sensor, a wheel speed sensor, a height sensor, a position sensor, a temperature sensor, a reversing sensor.

All the sensors may be the same type of sensor, or alternatively, one or more of the sensors may be the same type of sensor and one or more of the sensors may be a different type of sensor. Lastly, all of the sensors may be a different type of sensor.

The electronic control unit may form the entire seed from extracted bit(s). The electronic control unit may be operable to generate a seed formed of 16 or 32 bits. The electronic control unit may be configured to extract one or more bits from an end of the or each digital output. The electronic control unit may be operable to randomise the extracted bits when forming the seed.

The electronic control unit may be operable to store one or more digital outputs in memory. Optionally, the electronic control unit may store the digital outputs at one or more scheduled intervals during operation of the vehicle.

The electronic control unit may be operable to generate and send a seed to an external device. The electronic control unit may be operable to verify a key sent from the external device, which is generated from the seed, and on positive verification of the key the electronic control unit is operable to allow access to protected information.

Embodiments of the technology are illustrated in the accompanying figures by way of example only, of which:
Figure 1 illustrates an example system,
Figure 2 illustrates a method of generating a seed, and
Figure 3 is an example of how a seed-key authorisation process occurs.

### DETAILED DESCRIPTION

In embodiments, a vehicle is formed from a towing vehicle (known as a tractor) and a trailer. The vehicle could include more than one trailer connected together to form a "road train". The vehicle includes multiple axles, each of which supports at least a pair of wheels. Each wheel may be associated with its own brake actuator which is controllable to apply braking force / remove braking force. The vehicle has a braking system which controls the operation of the brake actuators on the tractor and the trailer. The brake system may be able to operate each brake actuator independently or in groups of two or more actuators (for example, axle by axle or by side of the vehicle).

The braking system includes an electronic braking system (EBS) which has an electronic control unit (ECU) 10 which is operable to send / receive signals relating to aspects of the braking system and process received signals to assess what action should be taken. Often the braking system has a second ECU (located on the trailer) that controls the trailer electronic braking system (EBS). The two ECUs send and receive communications between them, for example via a CAN bus, relating the operation of the braking system.

The ECU 10 and/or the trailer ECU may be configured to control the suspension / ride height of the vehicle in addition to the braking.

The braking system and the suspension system include multiple sensors 20, 22, 24, 26, 28, 30, 32, 34 which are positioned about the vehicle and measure different characteristics of the vehicle. These measurements are sent to the ECU 10 to be used as up to date information about the operation and conditions of the vehicle.

For example, a wheel speed sensor 20 is typically used to measure the rotation of a wheel. An anti-lock brake system (ABS) often uses the feedback of a wheel speed sensor to assess the frictional engagement of a wheel with a road surface during a test pulse of a brake actuator. Thus, the vehicle will have at least two wheel speed sensors 20 - one on each side of the vehicle - so that the differences between the left and right side of a vehicle can be assessed.

In another example, the braking system includes pipes which connect between an air supply and the brake actuators (although other component parts are also connected in between). The supply of air or absence of air to parts of the brake actuators enables the brakes to be released or applied depending on the type of brake cylinder. One or more pressure sensors 22 are located at desired points on the air supply pipework to provide feedback about the pressure present in the system.

The ECU 10 processes these measurements and controls the different aspects of the vehicle operation - for example, the control of the application or release of brakes and/or the control of the ride height of the vehicle and/or various safety checks that are processed before, during or after operation of the vehicle to ensure safe working of valves and other components of the system.

The processing of measurements may include a digitisation process. In such an example, the ECU 10 includes a digital converter 12 which processes the measurements provided by the sensor (an analogue signal) and converts it to a digital output. The ECU may include multiple digital converters 12 (also known as high resolution converters). Each converter 12 may receive the analogue signal from a single sensor 20, 22, 24, 26, 28, 30, 32, 34 and convert it to a digital output for further use within the ECU 10. Alternatively, the or each converter 12 may have multiple input channels, each of which is connected to a sensor on a one channel to one sensor basis. In such an example, the inputs may be multiplexed into the converter 12. When a result (e.g. a digital output) for a specific channel / sensor is complete, it is stored in a memory location associated with that channel / sensor. The convertor 12 may be configured to move from one channel to the next automatically to convert each signal in turn.

The ECU 10 is configured to run multiple safety checks and other processes independently of a user / driver (i.e. in other words, these processes are programmed to be completed on conditions being met (e.g. the ignition he turned on) irrespective of whether the user is aware or initiates them). Sometimes, these independent / automatic processes need to be reviewed and/or fine-tuned. In such a scenario an engineer will connect to the ECU 10 from an external device 100 (a "tester unit") and access the information held by the ECU 10 and / or alter processes that the ECU 10 performs.

The data stored in the ECU 10 is highly important for the safety and operation of the vehicle, so is protected through the use of a security process which restricts whether the external device 100 is able to access such data unless the device has passed a verification process. The use of a "challenge-response" process is described briefly in the introduction. Essentially, the external device 100 requests access to data that is protected and the ECU 10 follows a strict set of steps to ensure that the external device 100 is authorised to access it.

Once the external device 100 has requested access, a "seed" is generated by the ECU 10 and sent to the external device 100. Both the ECU 10 and the external device 100 perform a secret algorithm or manipulation to the seed in order to generate the key. The external device 100 sends the key to the ECU 10, which is then verified with the key that the ECU 10 has generated. Once the external device 100 is authorised, the data stored by the ECU 10 is accessible.

In this context, a "seed" is a random or pseudorandom number or bit string. In this described system, the seed generated includes 32 bits but it should be appreciated that this may be different for different systems / vehicles.

The ECU 10 has processing capability to operate the various systems (described above) on board the vehicle and must be able to generate a random on demand in an appropriate time frame.

The ECU 10 is configured to generate the seed by using a part of a signal sent by one or more sensors 20, 22, 24, 26, 28, 30, 32, 34 present in the vehicle. In this example, a sensor 20, 22, 24, 26, 28, 30, 32, 34 is present which is operable to measure a parameter indicative of a characteristic of the vehicle. The sensor 20, 22, 24, 26, 28, 30, 32, 34 outputs a signal relating to the measurement. The digital converter 12 is operable to receive and convert the signal to a digital output.

The ECU 10 is configured to process the digital output by extracting one or more bits from the digital output. The extracted bit(s) is used to generate at least a part of the seed.

In embodiments, the ECU 10 forms part of a braking system of the vehicle or part of the vehicle. The ECU 10 may be the ECU on the tractor or the ECU on the trailer - either is capable of generating a seed in the described manner.

As described above, the braking systems and/or the suspension system includes multiple sensors to measure different parameters inactive of different characteristics of the vehicle. The ECU 10 may use two or more of the sensors from the braking system and/or the suspension system. In other words, the ECU 10 may extract one or more bits from the digital output relating to two or more sensors. Each of those extracted bits is used in generating the seed. In some embodiments, the ECU 10 may use the measurements (and, hence, the digital outputs) from 16 sensors

In some embodiments, the entire seed may be generated using extracted bits from multiple digital outputs (in this example, one or two least significant bits are extracted from each sensor output - see below for more detail). The ECU 10 may be configured to extract two bits from each digital output that is being used to generate the seed. Thus, to form a 32 bit seed entirely from extracted bits requires the digital output from 16 sensors. It should be appreciated that if a shorter bit string is required for the seed, then the digital output from fewer sensors will be necessary. Likewise, if the ECU 10 uses only one bit from each digital output, then the digital output from more sensors will be required to form the entire seed from sensor measurements.

In some embodiments, the ECU 10 is configured to extract the last one or two bits from each digital output that the ECU 10 is using to form the seed. In other words, only the end of the digital output is used in the generation of the seed. This may be advantageous because during the conversion of the sensor signal (e.g. the analogue measurement) to the digital output, the last bits of the digital signal formed are not of importance to the actual reading of the sensor. These bits may be an indication of noise present as background in the system. For example, differences in ambient temperature, electromagnetic interference or vibration could alter the last bits present in the digital output. Further, converting such analogue signals may result in a noise component from the conversion itself. Either way, the last bits of the digital output are not really indicative of the actual physical parameter that the sensor is measuring. Previously, the last bits of the digital output may have been discarded or lost during further processing such as normalisation/ scaling and filtering. The present disclosure uses these otherwise useless data to form a pseudo-random seed (which is acceptable for use in such a security process between a tester unit and the ECU 10).

In some embodiments, one or more of the sensors used is one of a pressure sensor 20, a wheel speed sensor 22, a height sensor 24, a position sensor 26, a temperature sensor 28, a reversing / distance sensor 30, an input sensor / power supply readings 32, and monitoring of output drivers for solenoids or relays 34 (which may be valves that operate within the braking system of the vehicle). It should be appreciated that braking system and suspension system sensors are used as the ECU 10 has access to this data in normal use anyway as it controls the functioning / operation the braking system and / or the suspension system.

In some embodiments, once the ECU 10 has generated the seed, it is sent to an external device 100 (e.g. a tester unit requesting access to secure data on the ECU 10). Once the external device 100 sends the key generated from the seed to the ECU 10, the ECU 10 is operable to verify the key and authorise access to protected information stored by the ECU 10.

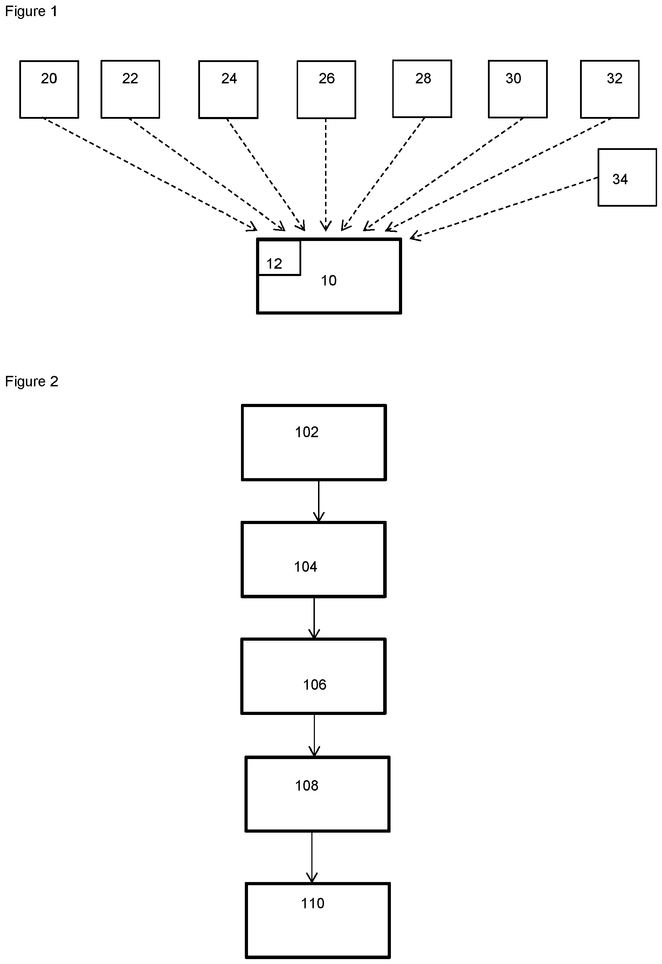

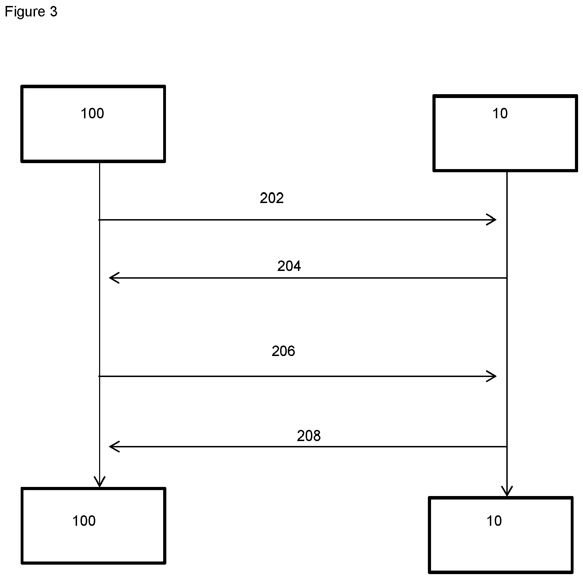

The method of seed generation will now be discussed in more detail with particular reference to figures 2 and 3. The process of forming the seed may start after the external device 100 has requested access (102) or, alternatively the ECU 10 may store information / one or more bits for generating the seed at all times. This may depend on the speed required to generate the seed - for example, if the ECU 10 must issue a seed to the external device 100 within a very short period after the request is made then the ECU 10 may need to store at least part of the seed in advance of the request being made. Whereas if more time is permitted between seed request and issue then the ECU 10 may operate subsequently to the request to form the entire seed.

In other known processes for generating the seed, the ECU 10 would be required to generate a random seed quickly on demand, which is computationally hard (particularly when the ECU 10 is primarily specified for running the functions on the vehicle rather than generating random numbers). With the described process here, the ECU 10 can generate a number that is suitably random (since the noise feedback from the digitisation process may be different even in two signals that report the same measurement) and is less computationally difficult for the ECU 10 to complete quickly on demand.

Alternatively, storing one or more bits in advance of the seed being requested may allow the ECU 10 to generate a "more" random seed. For example, if a digital output of a sensor signal is stored from a time when the vehicle is in a changeable state then the resultant digital output (and, thus, the extracted bits) will also be changeable / not consistent with a "normal" reading. Such a state could, for example, be straight after ignition of the vehicle when the system is warming up / approaching a normal operational state at different rates. In this situation, the digital output from one or more signals may be stored in memory (such as buffering them in RAM).

In other words, the ECU 10 may be configured to store the required bits for generating the random seed after a predetermined event occurs and / or a predetermined time after an event. Examples of suitable events in addition to the above could be a braking action and / or a suspension adjustment.

Furthermore, the ECU 10 may be configured to store digital outputs (and, thus, extract the bits) at predetermined intervals during operation of the vehicle. It should be appreciated that the ECU 10 may be operable to extract bits at the time the digital output is produced or the digital output may be stored and extraction of the bits occurs at a subsequent (later) time.

The ECU 10 may be configured to store all of the digital output / extracted bits required to form the seed at a single point in time. Alternatively, the ECU 10 may store digital outputs / extracted bits at predetermined time intervals (i.e. so that each digital output relates to a different time). Additionally, the ECU 10 may store outputs / bits at multiple predetermined intervals after a certain event has occurred.

The process starts with measuring a parameter indicative of a characteristic of the vehicle with a sensor 20, 22, 24, 26, 28, 30, 32, 34 (102). As discussed above, there may be more than one sensor 20, 22, 24, 26, 28, 30, 32, 34 measuring many different aspects and characteristics of the vehicle. Further, by different characteristic it is meant a different sensor 20, 22, 24, 26, 28, 30, 32, 34 placed in a different location - i.e. there may be two sensors each of which measures pressure but they measure the pressure present in different parts of the system. Thus, there may be more than one pressure sensor or more than one wheel speed sensor, for example, but they are positioned to measure the pressure of different parts of the system or the wheel speed of different wheels.

The sensor 20, 22, 24, 26, 28, 30, 32, 34 outputs a signal relating to the measurement (104). The digital converter 12 converts the sensor signal to a digital output (106). In other words, the sensor signal is an analogue signal and the digital convertor 12 processes the analogue signal to form a digitised version of the signal (i.e. a data packet formed of multiple bits). The digital output is used by the ECU 10 in further processing and operation of the system (i.e. adjustment of a braking application or other physical aspect of the vehicle that requires intervention / action) and / or the digital output is transmissible on a CAN bus connection (i.e. between ECUs).

In some embodiments, there are multiple digital converters 12, each processing a single sensor's signal. Therefore, the ECU 10 receives a digital output according to each sensor signal. In some embodiments, a digital converter 12 may digitise the signal from more than one sensor 20, 22, 24, 26, 28, 30, 32, 34. In such a scenario, additional components or programming may be used so that the sensor signals are identified as being from different sensors 20, 22, 24, 26, 28, 30, 32, 34.

Once the signal is converted to a digital output, the ECU 10 processes the digital output to extract one or more bits (108). In some embodiments, the processing step may involve extracting two bits from the digital output.

Additionally, the processing step may involve extracting specific bits from the digital output. For example, it may involve extracting the one or two bits at the end of the digital output. Thus, if the ECU 10 is processing multiple digital outputs, it may process each digital output to extract the last two bits from each digital output.

Once the ECU 10 has extracted the required bits, it proceeds to generating the final seed (110). This seed will be sent to the external device 100 requesting access. The seed is formed either entirely using extracted bits or at least partially from extracted bits. It should be appreciated that if the seed is to be made entirely from extracted bits then it is necessary that the ECU 10 processes enough digital outputs so that the final seed can be formed.

If the ECU 10 extracts a pair of bits from each digital output, half as many sensor signals will be required as the bit string length being used. In other words, if x is the bit string length needed for the seed then x/2 will be the number of digital outputs (and, hence, sensors) required. For example, if the ECU 10 extracts two bits from a single digital output then to form a seed of 32 bit length, 16 separate digital outputs need to be processed. It should be appreciated that different length bit strings may be used for the seed - common examples are 16 or 32 bits but it could be longer or shorter than those examples. Irrespective of the seed length, it should be appreciated that any of the method steps and/or components discussed could apply to generating a seed of any length.

The seed may be formed by concatenating the extracted bits. In this way, if for example 16 pairs of bits have been extracted, these 16 pairs of bits may be concatenated to form a 32 bit string. The sequence of concatenation may be predetermined, or alternatively may be randomised by the ECU 10. In embodiments, the pairs of bits may be split into separate individual bits, which are then concatenated in a predetermined or randomised order to form the final seed.

In other words, in embodiments of the technology the ECU 10 combines the extracted bit strings (i.e. pairs) coming from each separate digital output together, to form the seed (i.e. the 'final' seed). Thus, if the ECU 10 extracts two bits from each digital output, the order of those two bits forming the pair remains unchanged when concatenating the pairs to form the final seed (i.e. the order of the two-bit string received from one digital output stays constant even once incorporated in the seed).

As mentioned above, as an alternative, the ECU 10 may randomise each extracted pair of bits with other extracted bits to form the final seed. Further, as mentioned, the ordering of the concatenated pairs may be randomised. These steps may further improve the randomisation of the final seed.

Lastly, the seed is sent to the external device 100 (104). The external device 100 and the ECU 10 both operate on the seed to generate a key. The authorisation process then proceeds with the key formed at the external device 100 being sent back to the ECU 10 for verification (106). Further, the external device 100 is granted the requested access assuming the key is verified as being correct / acceptable (108).

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Representative features are set out in the following clauses, which stand alone or may be combined, in any combination, with one or more features disclosed in the text and/or drawings of the specification.
1. A method of generating a seed in a vehicle security protocol with a vehicle system including an electronic control unit, a sensor and a digital converter, the method including:
   measuring, using the sensor, a parameter indicative of a characteristic of a vehicle,
   outputting from the sensor a signal relating to the measurement,
   converting, using the digital converter, the signal to a digital output,
   receiving the digital output at the electronic control unit and processing to extract one or more bits from the digital output for use in seed generation, and
   using the extracted bit(s) as at least part of a seed.
2. A method according to clause 1 wherein the method includes using at least two sensors to measure at least two parameters, each being indicative of a characteristic of the vehicle, and outputting a signal from each sensor.
3. A method according to clause 2 wherein the method includes using at least 8 or at least 16 sensors, each sensor measuring a different parameter indicative of a characteristic of the vehicle, and outputting a signal from each sensor.
4. A method according to clause 2 or 3 wherein the method includes
   converting each signal to a digital output, and
   receiving each digital output at the electronic control unit and processing to extract one or more bits from each digital output.
5. A method according to any of the preceding clauses wherein the method includes extracting two bits from the digital output for use in seed generation.
6. A method according to any of the preceding clauses wherein the method includes using the extracted bit(s) to form all of the seed.
7. A method according to any of the preceding clauses wherein the method includes extracting the one or more bits from an end of the or each digital output.
8. A method according to any of the preceding clauses wherein the method includes forming a 16 or 32 bit string seed.
9. A method according to any of the preceding clauses wherein the method includes using the electronic control unit to randomise the extracted bits when forming the seed.
10. A method according to any of the preceding clauses wherein the method includes a step of storing one or more digital outputs in memory prior to forming the seed.
11. A method according to clause 10 wherein the method includes storing the digital output at a predetermined time after an event occurs, such as vehicle ignition.
12. A method according to any of the preceding clauses wherein the method includes sending the seed to an external device following a request by the external device to access protected information.
13. A system for generating a seed in a vehicle security protocol including:
   an electronic control unit,
   a digital converter, and
   a sensor operable to measure a parameter indicative of a characteristic of a vehicle and output a signal relating to the measurement, the digital converter operable to receive and convert the signal to a digital output, and
   wherein the electronic control unit is operable to process the digital output to extract one or more bits from the digital output, and to generate a seed at least partially from the extracted bit(s).
14. A system according to clause 13 wherein the electronic control unit forms part of a braking system of the vehicle or part of the vehicle.
15. A system according to clause 13 or 14 including two or more sensors, each being operable to measure a parameter indicative of a characteristic of the vehicle.
16. A system according to clause 15 including at least 8 or 16 sensors, each being operable to measure a parameter indicative of a characteristic of the vehicle.
17. A system according to any of clauses 13 to 16 wherein the or each sensor is a sensor used within a braking system and / or suspension system of the vehicle.
18. A system according to any of clauses 13 to 17 wherein the or each sensor is one of a pressure sensor, a wheel speed sensor, a height sensor, a position sensor, a temperature sensor, a reversing sensor.
19. A system according to any of clauses 13 to 18 wherein the electronic control unit forms the entire seed from extracted bit(s).
20. A system according to clause 13 to 19 wherein the electronic control unit is operable to generate a seed formed of 16 or 32 bits.
21. A system according to any of clauses 13 to 20 wherein the electronic control unit is configured to extract one or more bits from an end of the or each digital output.
22. A system according to any of clauses 13 to 21 wherein the electronic control unit is operable to randomise the extracted bits when forming the seed.
23. A system according to any of clauses 13 to 22 wherein the electronic control unit is operable to store one or more digital outputs in memory and, optionally, the electronic control unit stores the digital outputs at one or more scheduled intervals during operation of the vehicle.
24. A system according to any of clauses 13 to 23 wherein the electronic control unit is operable to generate and send a seed to an external device.
25. A system according to clause 24 wherein the electronic control unit is operable to verify a key sent from the external device, which is generated from the seed, and on positive verification of the key the electronic control unit is operable to allow access to protected information.

## Claims

1. A method of generating a seed in a vehicle security protocol with a vehicle system including an electronic control unit, a sensor and a digital converter, the method including:
measuring, using the sensor, a parameter indicative of a characteristic of a vehicle,
outputting from the sensor a signal relating to the measurement,
converting, using the digital converter, the signal to a digital output,
receiving the digital output at the electronic control unit and processing to extract one or more bits from the digital output for use in seed generation, and
using the extracted bit(s) as at least part of a seed.

2. A method according to claims 1 wherein the method includes using at least two sensors to measure at least two parameters, each being indicative of a characteristic of the vehicle, and outputting a signal from each sensor, and optionally the method includes using at least 8 or at least 16 sensors, each sensor measuring a different parameter indicative of a characteristic of the vehicle, and outputting a signal from each sensor.

3. A method according to claim 2 wherein the method includes
converting each signal to a digital output, and
receiving each digital output at the electronic control unit and processing to extract one or more bits from each digital output.

4. A method according to any of the preceding claims wherein the method includes extracting two bits from the digital output for use in seed generation, and / or wherein the method includes using the extracted bit(s) to form all of the seed and / or wherein the method includes forming a 16 or 32 bit string seed.

5. A method according to any of the preceding claims wherein the method includes extracting the one or more bits from an end of the or each digital output and / or wherein the method includes using the electronic control unit to randomise the extracted bits when forming the seed and / or wherein the method includes a step of storing one or more digital outputs in memory prior to forming the seed.

6. A method according to any one of the preceding claims wherein the method includes storing the digital output at a predetermined time after one or more events occur, wherein optionally the event is at least one of vehicle ignition, a braking action, and a suspension adjustment and / or wherein the method includes sending the seed to an external device following a request by the external device to access protected information.

7. A system for generating a seed in a vehicle security protocol including:
an electronic control unit,
a digital converter, and
a sensor operable to measure a parameter indicative of a characteristic of a vehicle and output a signal relating to the measurement, the digital converter operable to receive and convert the signal to a digital output, and
wherein the electronic control unit is operable to process the digital output to extract one or more bits from the digital output, and to generate a seed at least partially from the extracted bit(s).

8. A system according to claim 7 wherein the electronic control unit forms part of a braking system of the vehicle or part of the vehicle and / or wherein the system includes two or more sensors, each being operable to measure a parameter indicative of a characteristic of the vehicle, and optionally wherein the system includes at least 8 or 16 sensors, each being operable to measure a parameter indicative of a characteristic of the vehicle.

9. A system according to any of claims 7 or 8 wherein the or each sensor is a sensor used within a braking system and / or suspension system of the vehicle and / or wherein the or each sensor is one of a pressure sensor, a wheel speed sensor, a height sensor, a position sensor, a temperature sensor, a reversing sensor.

10. A system according to claim 9 including multiple sensors and all the sensors are either the same type of sensor, or one or more of the sensors are the same type of sensor and one or more of the sensors are a different type of sensor, or all the sensors are a different type of sensor.

11. A system according to any of claims 7 to 10 wherein the electronic control unit forms the entire seed from extracted bit(s) and / or wherein the electronic control unit is operable to generate a seed formed of 16 or 32 bits.

12. A system according to any of claims 7 to 11 wherein the electronic control unit is configured to extract one or more bits from an end of the or each digital output and / or wherein the electronic control unit is operable to randomise the extracted bits when forming the seed.

13. A system according to any of claims 7 to 12 wherein the electronic control unit is operable to store one or more digital outputs in memory and, optionally, the electronic control unit stores the digital outputs at one or more scheduled intervals during operation of the vehicle.

14. A system according to any of claims 7 to 13 wherein the electronic control unit is operable to generate and send a seed to an external device.

15. A system according to claim 14 wherein the electronic control unit is operable to verify a key sent from the external device, which is generated from the seed, and on positive verification of the key the electronic control unit is operable to allow access to protected information.
